(19) **Europäisches Patentamt**
**European Patent Office**
**Office européen des brevets**

(11) **EP 1 921 462 B1**

(12) **FASCICULE DE BREVET EUROPEEN**

(45) Date de publication et mention
de la délivrance du brevet:
**13.02.2013 Bulletin 2013/07**

(51) Int Cl.:
***G01S 5/02*** *(2010.01)*

(21) Numéro de dépôt: **07119428.6**

(22) Date de dépôt: **26.10.2007**

(54) **Procédé d'estimation de la distance entre deux équipements radio**

Verfahren zur Distanzabschätzung zwischen zwei Funkgeräten

Method of estimating the distance between two radio devices

(84) Etats contractants désignés:
**AT BE BG CH CY CZ DE DK EE ES FI FR GB GR
HU IE IS IT LI LT LU LV MC MT NL PL PT RO SE
SI SK TR**

(30) Priorité: **07.11.2006 FR 0654759**

(43) Date de publication de la demande:
**14.05.2008 Bulletin 2008/20**

(73) Titulaire: **FRANCE TELECOM
75015 Paris (FR)**

(72) Inventeurs:
 • **Schwoerer, Jean
 38000 Grenoble (FR)**
 • **Miscopein, Benoît
 38000 Grenoble (FR)**

(56) Documents cités:
**EP-A- 1 253 437    WO-A-2006/072697
WO-A-2006/072698    US-B1- 6 453 168**

• **B.DENIS: "Applications de Radiolocalisation
dans les réseaux sans-fil Utra-Large
Bande"[Online] 27 octobre 2006 (2006-10-27), - 27
octobre 2006 (2006-10-27) pages 1-35,
XP002439298 Extrait de l'Internet: URL:http://gdr-
ondes.lss.supelec.fr/actu/2 71006Denis.pdf>
[extrait le 2007-06-26]**
• **WOON-YONG PARK ET AL: "A novel ranging
method using energy window bank in non-
coherent UWB systems" IEICE TRANSACTIONS
ON FUNDAMENTALS OF ELECTRONICS,
COMMUNICATIONS AND COMPUTER SCIENCES
INST. ELECTRON. INF. & COMMUN. ENG JAPAN,
vol. E89-A, no. 6, juin 2006 (2006-06), pages
1766-1770, XP002439299 ISSN: 0916-8508**
• **DENIS B ET AL: "Impact of NLOS propagation
upon ranging precision in UWB systems" ULTRA
WIDEBAND SYSTEMS AND TECHNOLOGIES,
2003 IEEE CONFERENCE ON NOV. 16-19, 2003,
PISCATAWAY, NJ, USA,IEEE, 16 novembre 2003
(2003-11-16), pages 379-383, XP010683861 ISBN:
0-7803-8187-4**

# Description

L'invention concerne un procédé d'estimation de la distance entre deux équipements radio.

La position d'un équipement radio est une information qu'il est nécessaire de connaître dans le cadre de nombreuses applications. A titre d'exemples illustratifs, on peut citer les services de type "push" fournissant aux terminaux mobiles d'utilisateur des informations contextuelles en fonction de leur position, les services de guidage de la personne dans un lieu tel qu'un musée, ou encore le routage des paquets de données à travers un réseau maillé ou un réseau ad hoc.

Parmi les différentes techniques de positionnement existantes, il en existe qui sont basées sur un calcul coopératif de distance entre équipements radio ("ranging" en anglais) par simple mesure du temps de vol du signal radio. Connaissant la vitesse de propagation de l'onde électromagnétique, la mesure du temps de vol entre deux équipements radio permet de remonter à la distance en ligne droite, ou en ligne directe, séparant les deux équipements. On précise d'emblée que par "temps de vol entre deux équipements", on entend désigner la durée de transmission de l'onde électromagnétique pour aller de l'un des équipements à l'autre (dans un seul sens). Les techniques de calcul coopératif de distance reposent le plus souvent sur la méthode d'estimation suivante :

a) un premier équipement envoie à un second équipement une requête de mesure d'un délai d'échange $T_{ex}$ entre les deux équipements et déclenche un comptage du temps,

b) après réception de la requête, le second équipement laisse expirer une durée de temporisation $T_w$, connues des deux équipements, puis répond au premier équipement par l'envoi d'un accusé de réception ACK ("acknowledgement" en anglais),

c) sur réception de l'accusé de réception ACK, le premier équipement interrompt le comptage du temps, afin de mesurer la durée de l'échange $T_{ex}$, puis calcule le temps de vol TOF ("Time Of Flight" en anglais) du premier vers le second équipement en soustrayant la durée de temporisation $T_w$ de la durée d'échange mesurée $T_{ex}$ et en divisant le résultat de cette soustraction par deux,

d) connaissant le temps de vol TOF et la vitesse de propagation de l'onde électromagnétique V, le premier équipement calcule la distance en ligne droite D entre les deux équipements en divisant la durée d'échange $T_{ex}$ par la vitesse V, l'hypothèse étant faite que les signaux radio (aller et retour) de l'échange, dont la durée $T_{ex}$ a été mesurée, ont emprunté des trajets de propagation en lignes directes.

Ainsi l'estimation du temps de vol TOF entre le premier et le second équipement résulte d'une mesure de la durée d'un échange, c'est-à-dire d'un aller-retour, entre les deux équipements. Une telle mesure d'aller-retour est nécessaire dans le cas où les deux équipements sont asynchrones, c'est-à-dire non synchronisés sur une horloge commune, et ne partagent donc pas la même référence de temps. Dans le cas où les deux équipements seraient synchrones, il suffirait de mesurer la durée d'une transmission de l'un à l'autre équipement, dans un seul sens.

La méthode d'estimation du temps de vol TOF, telle que précédemment explicitée, donne de bons résultats lorsque les deux équipements sont distants l'un de l'autre. En effet, dans ce cas, l'hypothèse selon laquelle les signaux de l'échange, dont la durée $T_{ex}$ est mesurée, suivent des trajets de propagation, aller et retour, en lignes directes est une approximation acceptable, qui permet d'estimer la distance en ligne droite D entre les deux équipements avec une bonne précision. En revanche, lorsque les deux équipements sont relativement proches l'un de l'autre et dans un environnement favorisant les trajets de propagation multiples, comme c'est le cas par exemple dans un bâtiment, la mesure de la durée d'échange $T_{ex}$ entre les deux équipements risque d'être fortement affectée par des trajets de propagation multiples. Il en résulte que l'hypothèse selon laquelle les signaux de l'échange, dont la durée $T_{ex}$ est mesurée, empruntent des trajets de propagation (aller et retour) en lignes directes devient une approximation grossière, qui entache l'estimation de la distance en ligne droite D entre les deux équipements d'une erreur significative. En effet, la durée d'échange $T_{ex}$ est mesurée pour des trajets de propagation aller et retour empruntés chacun par une partie principale de l'énergie du signal (signal aller véhiculant la requête et signal retour véhiculant l'accusé de réception). Un trajet de propagation emprunté par la partie principale de l'énergie du signal sera appelé par la suite "trajet le plus fort", par souci de concision. Les équipements sont synchronisés sur le trajet le plus fort. Or, en cas de propagation du signal suivant plusieurs trajets, le trajet le plus fort ne correspond pas nécessairement au trajet de propagation en ligne directe entre les deux équipements. En effet, une partie secondaire de l'énergie du signal, plus faible, peut emprunter un trajet de propagation plus court, en ligne droite ou très proche de la ligne droite. Cette partie secondaire du signal est reçue avant le trajet le plus fort par l'équipement récepteur. Le trajet de propagation emprunté par la partie d'énergie du signal reçue en premier sera appelée par la suite "premier trajet de propagation" ou "trajet le plus court". En définitive, dans le cas où les équipements sont proches et dans un environnement susceptible d'occasionner des trajets de propagation multiples, le décalage qui peut exister entre l'instant d'arrivée de la partie du signal ayant emprunté le trajet le plus fort et l'instant d'arrivée de la partie du signal ayant emprunté le premier trajet est susceptible d'entacher l'estimation de la distance en ligne droite D entre les deux équipements d'une erreur significative.

Pour corriger cette erreur, le document WO 2006/072697 propose un procédé de mesure de la distance entre un premier et un second équipement radio se déroulant en deux phases. Lors de la première phase, les étapes a) à d) précédemment décrites sont exécutées de façon à ce que le premier équipement estime un premier temps de vol $TOF_1$. Lors de la seconde phase, le second équipement envoie au premier une trame de sondage de canal. Celle-ci est adaptée pour que le premier équipement détecte, à partir des différents signaux radio reçus correspondant à la trame de sondage, le trajet le plus fort et le premier trajet. Le premier équipement peut ainsi estimer une différence de temps de vol $\Delta TOF$ entre ces deux trajets et calculer un second temps de vol $TOF_2$, ou temps de vol corrigé, en soustrayant la différence de temps de vol $\Delta TOF$ déterminée du premier temps de vol $TOF_1$ mesurée.

Ce procédé d'estimation de la distance entre deux équipements radio peut être utilisé dans un réseau ad hoc de noeuds pour permettre notamment la localisation d'un nouveau noeud Z arrivant dans le réseau. Cependant, la mise en oeuvre de ce procédé est très coûteuse en consommation d'énergie pour le noeud Z à localiser. En effet, cela nécessite trois mesures distinctes, respectivement initiées par trois noeuds différents, notés ici A, B et C. Le noeud Z doit par conséquent émettre trois trames de sondage à destination de ces trois noeuds A, B et C respectivement. Or, l'émission de ces trames de sondage est consommatrice en énergie.

La présente invention vise à pallier cet inconvénient.

A cet effet, l'invention concerne un procédé d'estimation de la distance entre un premier et un second équipement radio comprenant

   ■ une phase d'estimation, mise en oeuvre par le premier équipement, d'un premier temps de vol entre les deux équipements correspondant à la durée de transmission de signaux pour aller de l'un à l'autre équipement en suivant un trajet de propagation, dit "trajet le plus fort", emprunté par une partie principale de l'énergie des signaux,
   ■ une phase d'estimation d'une différence de temps de vol comportant l'envoi d'une trame de sondage de canal de l'un à l'autre équipement et, à partir des signaux radio reçus correspondant à ladite trame de sondage de canal, l'estimation d'une différence de temps de vol entre le trajet de propagation le plus fort et un premier trajet de propagation,
   ■ une phase de calcul de la distance entre les deux équipements comportant la détermination d'un second temps de vol par soustraction de la différence de temps de vol estimée du premier temps de vol estimé et le calcul de la distance entre les deux équipements à partir du second temps de vol ainsi déterminé,

caractérisé par le fait que c'est le premier équipement qui envoie vers le second ladite trame de sondage de canal, l'estimation de la différence de temps de vol étant réalisée par le second équipement..

Selon l'invention, c'est l'équipement ayant fait une première estimation de la distance entre les deux équipements, qui émet lui-même la trame de sondage de canal. Ainsi, pour reprendre l'exemple précité de la localisation d'un nouveau noeud Z par trois noeuds A, B et C d'un réseau ad hoc, l'invention permet de répartir la charge de l'émission des trois trames de sondage de canal sur les trois noeuds requérants A, B, C et non pas sur le nouveau noeud Z. L'invention permet également de mieux répartir l'énergie électromagnétique dans l'espace en évitant l'émission de trois trames assez énergétiques depuis le même endroit, ce qui réduit l'impact des ondes électromagnétiques sur les utilisateurs et sur les systèmes radio situés à proximité.

Avantageusement, le premier équipement transmet au second équipement la valeur du premier temps de vol estimé et c'est le second équipement qui estime le second temps de vol et en déduit la distance entre les deux équipements.

Selon l'invention, c'est l'équipement sollicité par la requête qui procède à la mesure de la différence de temps de vol entre le trajet le plus fort et le premier trajet, puis éventuellement à l'estimation du second temps de vol et au calcul de la distance entre les deux équipements. Cela permet à l'équipement sollicité de décider seul de l'envoi ou non à l'équipement requérant, ou initiateur, d'une information relative à la mesure qu'il a faite (différence de temps de vol mesurée, second temps de vol estimé à partir de cette différence ou distance calculée sur la base du second temps de vol) et, par conséquent, de garder le contrôle de cette information pouvant être confidentielle.

Dans un mode de réalisation particulier, le second équipement transmet au premier la valeur de la distance estimée entre les deux équipements. Ainsi, le second équipement peut décider de communiquer au premier équipement la distance mesurée entre eux deux.

Avantageusement, le second équipement envoyant un accusé de réception en réponse à une requête du premier équipement lors de la phase d'estimation du premier temps de vol, le premier équipement laisse expirer une durée T entre l'instant d'arrivée de l'accusé de réception et l'instant d'émission de la trame de sondage de canal, ladite durée T comportant un temps de garde adapté pour permettre au premier équipement d'estimer le premier temps de vol suivi d'un temps de pause adapté pour respecter les conditions d'un accès partagé au canal et étant telle que la durée totale de la phase d'estimation du premier temps de vol et de la phase d'estimation d'une différence de temps de vol soit inférieure au temps de cohérence du canal.

Ainsi, l'envoi de la trame de sondage de canal par le premier équipement peut être fait tout en respectant les mécanismes de partage d'accès au canal. Cela évite une préemption autoritaire du canal par le premier équipement pendant une longue durée, nécessaire pour l'envoi de la trame de sondage, et donc le risque de collision y afférent. En outre, cette durée T est adaptée pour que les deux premières phases (d'estimation du premier temps de vol et d'estimation de la différence de temps de vol) aient une durée totale inférieure au temps de cohérence du canal, défini comme la durée pendant laquelle les propriétés du canal ne changent pas de façon significative. On s'assure ainsi que le canal est resté stable entre la mesure du premier temps de vol et la mesure de la différence de temps de vol.

L'invention concerne aussi un dispositif pour l'estimation de la distance entre un premier et un second équipement, ledit dispositif étant destiné à être intégré dans le premier équipement et comprenant des moyens d'envoi vers le second équipement d'une requête aux fins de mesurer une durée d'échange entre les deux équipements, des moyens pour recevoir un accusé de réception en réponse à la requête, des moyens de mesure de la durée de l'échange entre les deux équipements et des moyens d'envoi d'une trame de sondage de canal vers le second équipement.

L'invention concerne encore un dispositif pour l'estimation de la distance entre un premier et un second équipement, ledit dispositif étant destiné à être intégré dans le second équipement et comprenant des moyens pour, sur réception d'une requête aux fins de mesurer une durée d'échange entre les deux équipements, émettre un accusé de réception, des moyens pour recevoir une trame de sondage de canal et pour, à partir des signaux radio reçus correspondant à ladite trame de sondage de canal, estimer une différence de temps de vol entre le trajet de propagation le plus fort, emprunté par une partie principale de l'énergie des signaux reçus, et un premier trajet de propagation.

L'invention sera mieux comprise à l'aide de la description suivante de différents modes de réalisation particuliers du procédé d'estimation de la distance entre deux équipements selon l'invention, ainsi que de formes de réalisation particulières des dispositifs et du système de l'invention, en référence aux dessins annexés sur lesquels :

- la figure 1 représente un système de communication par voie radio destiné à mettre en oeuvre le procédé de l'invention, selon un mode particulier décrit ;
- la figure 2 représente les échanges de trames entre les deux équipements, selon un mode de réalisation particulier du procédé de l'invention ;
- la figure 3 représente un organigramme des différentes étapes du procédé selon le mode de réalisation de la figure 2;
- les figures 4A et 4B représentent des schémas blocs fonctionnels respectifs de deux équipements, l'un réalisant une première estimation de la distance entre les deux équipements et l'autre sollicité pour cette estimation, selon des formes de réalisation particulières, adaptées pour mettre en oeuvre le procédé des figures 2 et 3.

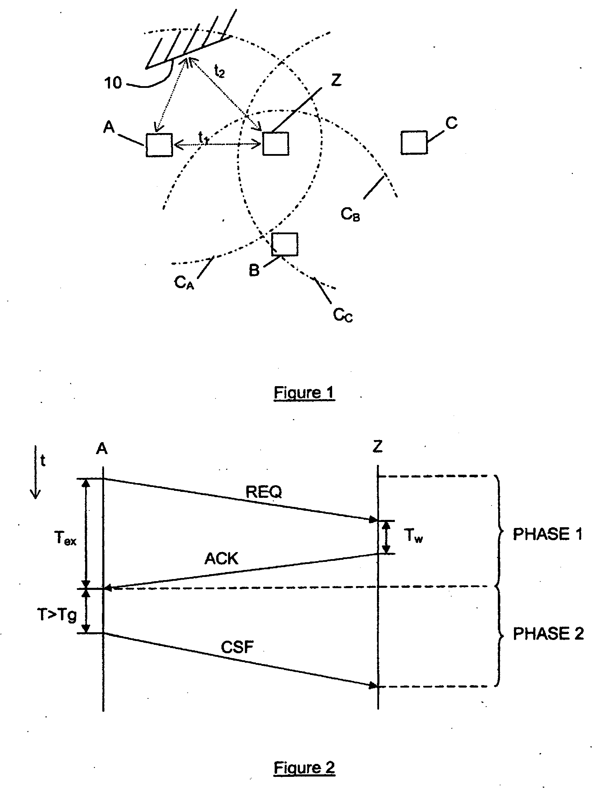

Sur la figure 1, on a représenté un système de communication comportant une pluralité d'équipements, référencés A, B, C et Z, comportant chacun une interface d'émission et de réception radio. Dans l'exemple particulier décrit, les équipements sont des capteurs appartenant à un système de gestion domotique et forment un réseau ad hoc. Ce système est destiné à capter des informations relatives à l'environnement à l'intérieur d'une habitation, telles la température, la luminosité, le niveau sonore, etc.. Les cercles $C_A$, $C_B$ et $C_C$ représentent les frontières des zones de portée, ou cellules, respectives des équipements A, B et C. Comme on peut le voir sur la figure 1, l'équipement Z est situé dans les zones de portée respectives de chacun des trois équipements A, B et C.

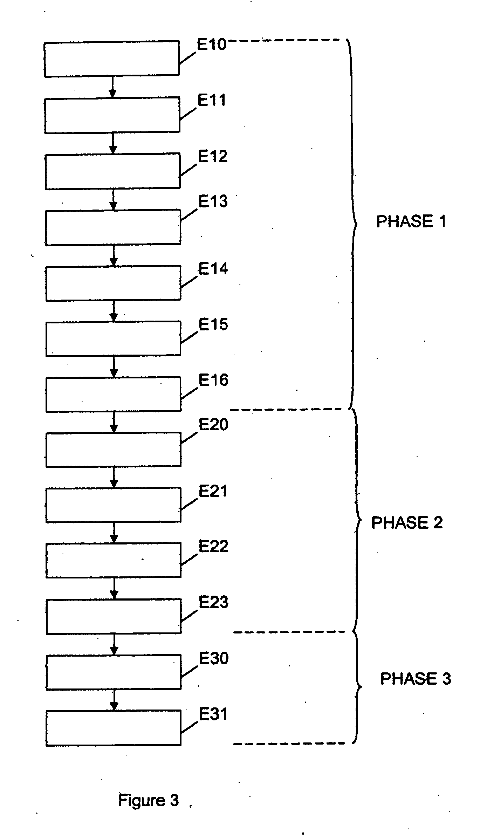

En référence aux figures 2 et 3, on va maintenant décrire un premier mode de réalisation particulier du procédé de l'invention pour l'estimation de la distance entre l'équipement Z et l'un des trois autres équipements, par exemple A. Sur la figure 2, le sens de la flèche t représente le sens de l'écoulement du temps.

Le procédé comprend une phase 1, mise en oeuvre par l'équipement A, d'estimation d'un premier temps de vol $TOF_1$ entre les deux équipements A et Z. Cette phase 1 comprend plusieurs étapes référencées E10 à E16. Lors de l'étape E10, l'équipement A, ici initiateur, envoie à l'équipement Z, sollicité, une requête, notée REQ, aux fins de mesurer la distance entre les deux équipements A et Z. Au moment où il envoie cette requête, l'équipement A mémorise l'instant d'émission de la requête et déclenche un comptage du temps à partir de cet instant.

L'équipement Z reçoit la requête REQ à l'étape E11 et, en réponse, envoie un accusé de réception, noté ACK, à l'équipement A, à l'étape E13. On notera que, si l'équipement Z ne souhaite pas être localisé, il lui suffit de ne pas envoyer d'accusé de réception en réponse à la requête REQ. Entre le moment où il reçoit la requête REQ (étape E11) et le moment où il émet l'accusé de réception ACK (étape E13), l'équipement Z laisse expirer à l'étape E12 une durée de temporisation $T_w$, connue des deux équipements A et Z. Pour émettre l'accusé de réception ACK précisément à l'issue de la durée de temporisation $T_w$, l'équipement Z réalise si nécessaire une préemption autoritaire du canal, sans tenir compte des conditions d'accès partagé de celui-ci. Toutefois, l'accusé de réception étant véhiculé par une simple trame de données, de courte de durée, de l'ordre quelques centaines de micro-secondes, l'occupation autoritaire du canal par l'équipement Z est brève. Cela minimise en particulier les risques de collision avec le trafic entre l'équipement Z et l'équipement C ou l'équipement B, lesquels sont hors de portée radio de l'équipement A et ne peuvent donc pas savoir qu'une estimation de distance est en cours.

A l'étape E14, l'équipement A reçoit l'accusé de réception ACK et interrompt alors le comptage du temps afin de déterminer l'instant d'arrivée de l'accusé de réception ACK. A l'étape E15, à partir de l'instant d'émission de la requête REQ mémorisé et de l'instant d'arrivée de l'accusé de réception ACK, l'équipement A mesure la durée de l'échange entre les deux équipements A et Z, notée $T_{ex}$, c'est-à-dire la durée entre l'émission de la requête REQ et la réception de l'accusé de réception ACK en retour. A l'étape E16, l'équipement A soustrait de la durée d'échange $T_{ex}$ mesurée la durée de temporisation $T_w$ et divise le résultat de cette soustraction par deux pour en déduire un premier temps de vol $TOF_1$ entre les deux équipements A et Z, c'est-à-dire une première estimation de la durée de transmission de signaux pour aller de l'un à l'autre des équipements. Le premier temps de vol $TOF_1$ correspond à la durée de transmission de signaux pour aller de l'un à l'autre équipement en suivant un trajet de propagation emprunté par une partie principale de l'énergie des signaux, c'est-à-dire le "trajet le plus fort".

Dans l'exemple particulier qui vient d'être décrit, c'est l'équipement A réalisant l'estimation du premier temps de vol $TOF_1$ qui, de sa propre initiative, lance le processus d'estimation de la distance entre A et Z, par envoi d'une requête à l'équipement Z. En variante, on pourrait envisager que l'équipement Z envoie une requête préliminaire à l'équipement A pour lui demander de déclencher la mise en oeuvre du processus d'estimation de la distance entre A et Z. Dans ce cas, sur réception de cette requête préliminaire, l'équipement A lancerait l'exécution des étapes E10 à E16 conformément à ce qui vient d'être décrit.

Comme on peut le voir sur la figure 1, les signaux transmis de l'un à l'autre des équipements A et Z peuvent suivre au moins deux trajets de propagation distincts, respectivement notés $t_1$ et $t_2$. Il pourrait y en avoir d'autres. Le trajet $t_1$ correspond au trajet de propagation en ligne droite, soit le plus court, entre A et Z, alors que le trajet $t_2$ comporte ici une réflexion intermédiaire sur une surface 10. Dans l'exemple particulier décrit, on suppose que le trajet $t_2$ est "le trajet le plus fort" dans le sens aller (de A vers Z) ainsi que dans le sens retour (de Z vers A), le canal étant bijectif. Autrement dit, lors de la transmission de la requête REQ, une partie principale de l'énergie des signaux transmis correspondant à cette requête REQ emprunte le trajet $t_2$. De même, lors de la transmission de l'accusé de réception ACK, une partie principale de l'énergie des signaux correspondant à cet accusé de réception ACK emprunte le trajet $t_2$. Le premier temps de vol mesuré $TOF_1$ correspond donc à la durée de transmission de ceux des signaux transmis qui ont emprunté le trajet $t_2$. Il est donc entaché d'une erreur correspondant à la différence entre le temps de vol suivant le trajet le plus fort $t_2$ et le temps de vol suivant le trajet le plus court, ou "premier trajet", $t_1$.

Une phase 2 d'estimation d'une différence de temps de vol est ensuite exécutée. Cette phase 2 comprend les étapes E20 à E23. Lors de l'étape E21, l'équipement A ayant réalisé la première estimation de la distance $TOF_1$ envoie à l'équipement Z sollicité une trame de sondage de canal, notée "CSF" ("Channel Sonding Frame" en anglais). Dans l'exemple particulier décrit ici, cette trame CSF contient la valeur du premier temps de vol estimé $TOF_1$. L'étape E21 d'émission de la trame CSF est précédée d'une étape E20 au cours de laquelle l'équipement A laisse expirer une durée T à compter de l'instant d'arrivée de l'accusé de réception ACK. Cette durée T comporte ici un temps de garde $T_g$, de durée suffisante pour permettre à l'équipement A d'estimer le premier temps de vol $TOF_1$, suivi d'un temps de pause $T_p$ pour respecter les conditions d'un accès partagé au canal. Ainsi, la transmission de la trame CSF à l'étape E21, de longue durée, de l'ordre de quelques millisecondes, ne nécessite pas de préemption autoritaire prolongée du canal. Les signaux correspondant à la trame de sondage sont transmis de l'équipement A à l'équipement Z en suivant, pour une partie d'entre eux, le trajet de propagation $t_1$ et, pour l'autre partie, le trajet de propagation $t_2$. Dans l'exemple décrit ici, une partie principale de ces signaux suit le trajet de propagation $t_2$, alors qu'une partie secondaire des signaux suit le trajet de propagation $t_1$, plus court. A l'étape E22, à partir des signaux reçus correspondant à la trame CSF, l'équipement Z détecte les différents trajets de propagation suivis par ces signaux, et en particulier le premier trajet de propagation, ou trajet le plus court, $t_1$, et le trajet de propagation le plus fort, $t_2$, en mettant en oeuvre une technique, connue de l'homme du métier et non explicitée ici, de détection des trajets de propagation. A l'étape E23, l'équipement Z estime ensuite une différence de temps de vol $\Delta TOF$ entre le trajet de propagation le plus fort $t_2$, correspondant au trajet pour lequel la mesure du premier temps de vol $TOF_1$ a été faite, et le premier trajet de propagation $t_1$. Autrement dit, la différence de temps de vol $\Delta TOF$ estimée correspond à la différence entre le temps de vol des signaux ayant suivi le trajet de propagation le plus fort $t_2$ et le temps de vol des signaux ayant suivi le premier trajet de propagation $t_1$.

Pour obtenir une bonne précision dans la mesure, il faut que les propriétés du canal restent stationnaires, autrement dit ne changent pas de façon significative, entre l'estimation du premier temps de vol $TOF_1$ et l'estimation de la différence de temps de vol $\Delta TOF$. Pour limiter ce risque, la durée T de l'étape E20 doit être adaptée pour que la durée totale de la phase d'estimation du premier temps de vol $TOF_1$ et de la phase 2 d'estimation d'une différence de temps de vol $\Delta TOF$ soit inférieure ou égale au temps de cohérence du canal, défini comme la durée pendant laquelle les propriétés du canal ne changent pas de façon significative. De façon optionnelle, pour vérifier si le canal est bien resté stationnaire pendant entre l'estimation du premier temps de vol $TOF_1$ et l'estimation de la différence de temps de vol $\Delta TOF$, on peut réitérer, après la phase 2, une nouvelle phase d'estimation d'un premier temps de vol, analogue à la phase 1 précédemment décrite. On estime ainsi un nouveau premier temps de vol, noté $TOF_{1bis}$. Si les deux premiers temps de vol, $TOF_1$ et $TOF_{1bis}$, sont cohérents, cela signifie que le canal est resté constant durant les deux phases 1 et 2. Sinon, cela signifie que la précision de la mesure est compromise.

Après la phase 1 d'estimation d'un premier temps de vol $TOF_1$ et la phase 2 d'estimation d'une différence de temps de vol $\Delta TOF$, le procédé comprend une phase 3 de calcul de la distance entre les deux équipements A et Z. Cette phase 3 comprend les étapes E30 et E31. A l'étape E30, l'équipement Z détermine un second temps de vol $TOF_2$ par soustraction de la différence de temps de vol estimée $\Delta TOF$ du premier temps de vol estimé $TOF_1$, dont la valeur lui a été transmise par l'équipement A à l'étape E21 de transmission de la trame de sondage :

$$TOF_2 = TOF_1 - \Delta TOF \quad (1)$$

Puis, à l'étape E31, l'équipement Z calcule la distance en ligne droite D entre les deux équipements A et Z, à partir du second temps de vol ainsi déterminé $TOF_2$ et de la vitesse V de l'onde électromagnétique:

$$D = V * TOF_2 \quad (2)$$

S'il le souhaite, l'équipement Z peut ensuite communiquer à l'équipement A la valeur de la distance D estimée par l'envoi d'une simple trame de données, de courte durée. L'équipement Z pourrait également diffuser cette trame de données à l'ensemble des équipements situés dans sa zone de portée radio, soit ici les équipements B et C, pour leur permettre de se positionner les uns par rapport aux autres.

Au lieu d'être exécutée par l'équipement Z, la phase 3 de calcul de la distance D pourrait être exécutée par l'équipement A. Dans ce cas, à l'issue de la phase 2 d'estimation de la différence de temps de vol, l'équipement Z communiquerait à l'équipement A la différence de temps de vol estimée, par l'envoi d'une simple trame de données, et il ne serait pas nécessaire de transmettre à l'équipement Z la valeur du premier temps de vol $TOF_1$ estimé par l'équipement A. Dans une autre variante, les deux équipements A et Z pourraient exécuter parallèlement la phase de calcul 3, sous réserve que A communique à Z la valeur du premier temps de vol estimé $TOF_1$ et que Z communique à A la valeur de la différence de temps de vol estimée $\Delta TOF$.

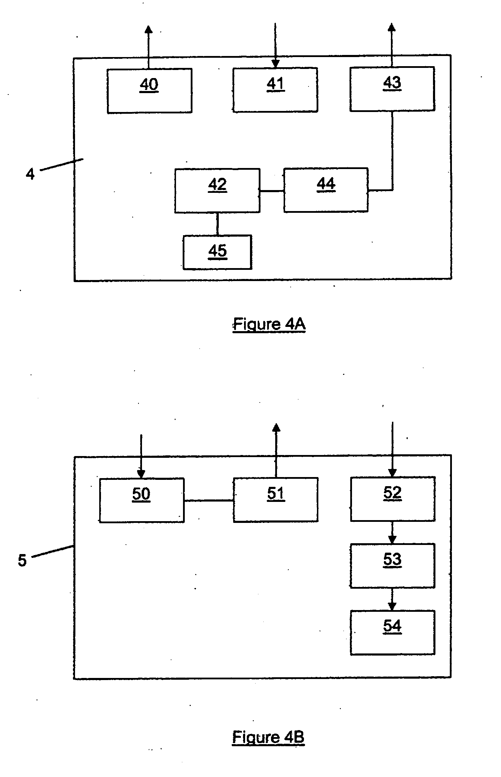

Sur la figure 4A, on a représenté un schéma bloc fonctionnel d'un dispositif 4 pour l'estimation de la distance entre deux équipements, l'un initiateur et l'autre sollicité. Ce dispositif 4 est destiné à être intégré dans un équipement radio initiateur de l'estimation de la distance, tel que l'équipement A de la figure 1, comprenant une interface d'émission et de réception radio. Le dispositif 4 comprend :

- un module 40 d'envoi vers un équipement sollicité d'une requête REQ aux fins de mesurer une durée d'échange entre les deux équipements, destiné à commander l'envoi par l'interface radio de l'équipement d'une requête REQ comme décrit à l'étape E10 et à signaler cet envoi à un module 42 de mesure du temps d'échange ;
- un module 41 de réception d'un accusé de réception ACK en réponse à la requête REQ, destiné à surveiller la réception de l'accusé de réception par l'interface radio de l'équipement et à la signaler au module 42 de mesure du temps d'échange et à un module 43 d'envoi d'une trame CSF ;
- le module 42 de mesure de la durée de l'échange $T_{ex}$ entre les deux équipements, relié aux modules 40 et 41, agencé pour déclencher un comptage du temps à l'envoi de la requête REQ par le module 40 et à l'interrompre ;
- le module 43 d'envoi d'une trame CSF de sondage de canal vers l'équipement sollicité, relié au module 41 et agencé pour commander l'émission d'une trame CSF par l'interface radio de l'équipement, après avoir laissé expirer une durée T à compter de l'instant d'arrivée de l'accusé de réception ACK, comme décrit aux étapes E20 et E21 ;
- une horloge interne 44, reliée aux modules 42 et 43 ; et
- une mémoire de stockage 45 agencée pour mémoriser l'instant d'émission de la requête REQ et l'instant d'arrivée de l'accusé de réception ACK.

Les modules du dispositif 4 décrits ci-dessus sont reliés à une unité centrale de contrôle de l'équipement, non représentée, laquelle est destinée à contrôler leur fonctionnement. Il peut s'agir de modules logiciels d'un programme d'ordinateur. L'invention concerne donc aussi un programme d'ordinateur pour un dispositif d'estimation de la distance entre deux équipements, comprenant des instructions de code pour commander l'exécution de celles des étapes du procédé précédemment décrit qui sont réalisées par l'équipement initiateur A. Ce programme peut être stocké dans ou transmis par un support de données, qui peut être un support matériel de stockage, par exemple un CD-ROM, une disquette magnétique ou un disque dur, ou bien un support transmissible tel qu'un signal électrique, optique ou radio.

Sur la figure 4B, on a représenté un schéma bloc fonctionnel d'un dispositif 5 pour l'estimation de la distance entre deux équipements, l'un initiateur et l'autre sollicité. Ce dispositif 5 est destiné à être intégré dans l'équipement radio sollicité pour l'estimation de la distance, tel que l'équipement Z de la figure 1, comprenant une interface d'émission et de réception radio. Il comprend :

- un module 50 de réception d'une requête REQ aux fins de mesurer une durée d'échange entre les deux équipements, agencé pour détecter la réception d'une telle requête par l'interface radio de l'équipement ;

- un module 51 d'émission d'un accusé de réception, agencé pour commander l'émission d'un accusé de réception ACK par l'interface radio de l'équipement, en réponse à une requête REQ reçue, après avoir laissé expirer une durée de temporisation $T_w$ à compter de l'instant d'arrivée de la requête, comme décrit aux étapes E12 et E13 ;
- un module 52 de réception et d'analyse d'une trame de sondage de canal, agencé pour détecter la réception de la trame de sondage par l'interface radio de l'équipement, en extraire le cas échéant la valeur d'un premier temps de vol $TOF_1$ transmis et détecter un premier trajet de propagation et le trajet de propagation le plus fort, à partir des signaux reçus correspondant à la trame de sondage ;
- un module 53, relié au module 52, pour estimer une différence de temps de vol ($\Delta TOF$) entre le trajet de propagation le plus fort et un premier trajet de propagation, détectés par le module 52 ;
- un module 54, relié au module 53, de calcul de la distance entre les deux équipements agencés pour calculer un second temps de vol par soustraction de la différence de temps de vol ($\Delta TOF$) estimée du premier temps de vol transmis et pour calculer ladite distance à partir du second temps de vol déterminé, comme décrit aux étapes 30 et 31.

Les modules du dispositif 5 décrits ci-dessus sont reliés à une unité centrale de contrôle de l'équipement, non représentée, laquelle est destinée à contrôler leur fonctionnement. Il peut s'agir de modules logiciels d'un programme d'ordinateur. L'invention concerne donc aussi un programme d'ordinateur pour un dispositif d'estimation de la distance entre deux équipements, comprenant des instructions de code pour commander l'exécution de celles des étapes du procédé précédemment décrit qui sont réalisées par l'équipement sollicité Z. Ce programme peut être stocké dans ou transmis par un support de données, qui peut être un support matériel de stockage, par exemple un CD-ROM, une disquette magnétique ou un disque dur, ou bien un support transmissible tel qu'un signal électrique, optique ou radio.

Généralement, les équipements comprennent à la fois un dispositif 4 et un dispositif 5 afin d'être aptes à jouer les rôles des deux équipements A et Z dans le procédé précédemment décrit.

L'invention concerne aussi le système de radiocommunication comprenant un équipement sollicité et au moins un équipement initiateur.

Dans le premier mode de réalisation précédemment décrit, la phase 1 d'estimation d'un premier temps de vol est exécutée avant la phase 2 d'estimation d'une différence de temps de vol. Dans un second mode de réalisation, l'ordre de ces deux phases est inversé: la phase 2 d'estimation d'une différence de temps de vol est exécutée avant la phase 1 d'estimation d'un premier temps de vol.

Dans un troisième mode de réalisation, la phase 1 d'estimation d'un premier temps de vol comprend plusieurs itérations successives de l'ensemble des étapes E10 à E16. Ainsi, l'équipement A obtient plusieurs estimations consécutives du premier temps de vol $TOF_1$, à partir desquelles il détermine un premier temps de vol moyen $TOF_{1moy}$ en calculant une moyenne des différentes estimations obtenues. Lors de la phase 3, c'est ce premier temps de vol moyen $TOF_{1moy}$ qui est utilisé pour calculer le second temps de vol $TOF_2$ à l'aide de la formule (1). Le fait de prendre la moyenne de plusieurs estimations du premier temps de vol permet de diminuer le risque d'erreur de mesure.

Dans la description qui précède, on suppose que les deux équipements A et Z sont asynchrones, de sorte qu'il est nécessaire de mesure un temps d'échange $T_{ex}$ entre les deux équipements A et Z afin d'en déduire un premier temps de vol. L'invention pourrait toutefois s'appliquer au cas où les deux équipements seraient synchrones. Dans ce cas, il suffirait de mesurer la durée de transmission d'une trame de données pour aller par exemple de A à Z suivant le trajet le plus fort pour en déduire un premier temps de vol $TOF_1$.

On va maintenant décrire un procédé de localisation de l'équipement Z. On suppose ici que Z est un équipement mobile arrivant dans le réseau ad hoc formé par les trois équipements A, B et C de positions respectives $P_A$, $P_B$ et $P_C$ connues. L'équipement Z se place en une position Pz à déterminer. Pour localiser l'équipement Z, chacun des trois équipements A, B et C, dits "équipements interrogateurs", met en oeuvre les étapes E10, E14 à E16, E20 et E21, précédemment décrites, tandis que l'équipement Z, dit "équipement interrogé" met en oeuvre les étapes E11 à E13, E22, E23, E30 et E31, précédemment décrites. Ainsi, ce sont les trois équipements interrogateurs A, B et C, c'est-à-dire ceux ayant initié l'estimation de la distance entre eux-mêmes et l'équipement interrogé Z, qui émettent les trois trames de sondage de canal, respectivement. Cela permet, d'une part, de répartir la charge de l'émission des trois trames de sondage de canal sur les trois équipements interrogateurs A, B, C et non pas sur le seul nouveau noeud Z, et, d'autre part, de mieux répartir l'énergie électromagnétique dans l'espace en évitant l'émission de trois trames assez énergétiques depuis le même endroit. Le réseau ad hoc, connaissant les distances $D_{AZ}$ entre A et Z, $D_{BZ}$ entre B et Z, Dcz entre C et Z, ainsi que les positions $P_A$, $P_B$ et Pc des trois équipements A, B et C, peut en déduire la position Pz de l'équipement Z.

On pourrait utiliser de manière analogue le procédé de localisation qui vient d'être décrit pour localiser un équipement Z dans l'espace, en procédant à l'estimation de la distance entre Z et au moins quatre autres équipements A, B, C et D de positions respectives distinctes connues.

Dans la description qui précède, les équipements radio sont des capteurs. Bien entendu, il pourrait s'agir de tout autre type d'équipements radio tels que des terminaux de communication ou des objets communicants. La présente invention est adaptée à la radio impulsionnelle ultra large bande mais elle est applicable à d'autre système radio (DS-SS, etc.).

## Revendications

1. Procédé d'estimation de la distance entre un premier et un second équipement radio comprenant

   ■ une phase (1) d'estimation, mise en oeuvre par le premier équipement (A), d'un premier temps de vol entre les deux équipements (A, Z) correspondant à la durée de transmission de signaux pour aller de l'un à l'autre équipement en suivant un trajet de propagation, dit "trajet le plus fort", emprunté par une partie principale de l'énergie des signaux,
   ■ une phase (2) d'estimation d'une différence de temps de vol comportant l'envoi d'une trame de sondage de canal de l'un à l'autre équipement (E21) et, à partir des signaux radio reçus correspondant à ladite trame de sondage de canal, l'estimation d'une différence de temps de vol ($\Delta$TOF) entre le trajet de propagation le plus fort et un premier trajet de propagation (E22),
   ■ une phase (3) de calcul de la distance entre les deux équipements (A, Z) comportant la détermination d'un second temps de vol ($TOF_2$) par soustraction de la différence de temps de vol estimée ($\Delta$TOF) du premier temps de vol estimé ($TOF_1$) (E30) et le calcul de la distance (D) entre les deux équipements à partir du second temps de vol ainsi déterminé ($TOF_2$) (E31),

   **caractérisé par le fait que** c'est le premier équipement, dit initiateur (A), qui envoie vers le second (Z), dit sollicité, ladite trame de sondage de canal (E21), l'estimation de la différence de temps de vol (E22) étant réalisée par le second équipement sollicité (Z).

2. Procédé selon la revendication 1, dans lequel le premier équipement initiateur (A) transmet au second équipement sollicité (Z) la valeur du premier temps de vol estimé ($TOF_1$) (E21) et c'est le second équipement sollicité (Z) qui estime le second temps de vol ($TOF_2$) (E30) et en déduit la distance (D) entre les deux équipements (E31).

3. Procédé selon l'une des revendications 1 et 2, dans lequel le second équipement sollicité (Z) transmet au premier initiateur (A) la valeur de la distance (D) estimée entre les deux équipements (A, Z).

4. Procédé selon l'une des revendications 1 à 3, dans lequel, le second équipement sollicité (Z) envoyant un accusé de réception en réponse à une requête du premier équipement initiateur (A) (E12) lors de la phase (1) d'estimation du premier temps de vol, le premier équipement initiateur laisse expirer une durée T entre l'instant d'arrivée de l'accusé de réception et l'instant d'émission de la trame de sondage de canal (E20), ladite durée T comportant un temps de garde adapté pour permettre au premier équipement initiateur d'estimer le premier temps de vol ($TOF_1$) suivi d'un temps de pause adapté pour respecter les conditions d'un accès partagé au canal et étant adaptée pour que la durée totale de la phase (1) d'estimation du premier temps de vol et de la phase (2) d'estimation d'une différence de temps de vol soit inférieure au temps de cohérence du canal.

5. Procédé selon l'une des revendications précédentes, dans lequel, lors de la phase (1) d'estimation du premier temps de vol, le second équipement sollicité (Z) laisse expirer une durée de temporisation ($T_w$) (E11), connue des deux équipements, entre le moment où il reçoit une requête du premier équipement initiateur et le moment où il émet un accusé de réception en réponse, et le premier équipement initiateur (A) mesure la durée de l'échange entre les deux équipements (E15), soustrait ladite durée de temporisation de la durée d'échange mesurée et divise le résultat de la soustraction par deux afin d'estimer le premier temps de vol ($TOF_1$) (E16).

6. Procédé selon l'une des revendications précédentes, dans lequel, la phase (1) d'estimation d'un premier temps de vol comprend plusieurs estimations du premier temps de vol ($TOF_1$) et, à partir des différentes estimations du premier temps de vol, le premier équipement initiateur calcule un premier temps de vol moyen.

7. Procédé de localisation d'un équipement à localiser (Z) par un ensemble d'au moins trois autres équipements (A, B, C), dans lequel chacun des trois autres équipements (A, B, C) dudit ensemble met en oeuvre celles des étapes réalisées par le premier équipement initiateur dans le procédé des revendications 1 à 6, tandis que l'équipement à localiser (Z) met en oeuvre celles des étapes réalisées par le second équipement sollicité dans le procédé selon l'une des revendications 1 à 5.

8. Equipement (A), dit "initiateur", adapté pour initier une estimation de la distance entre ledit équipement initiateur (A) et un autre équipement (Z), dit "sollicité", comprenant

   - des moyens (40) d'envoi vers l'équipement sollicité (Z) d'une requête aux fins de mesurer une durée d'échange entre les deux équipements (A, Z),
   - des moyens (41) pour recevoir un accusé de réception en réponse à la requête,
- des moyens (42, 44, 45) de mesure de la durée de l'échange entre les deux équipements (A, Z),
- des moyens pour calculer, à partir de la durée d'échange mesurée, un premier temps de vol entre les deux équipements (A, Z), correspondant à la durée de transmission de signaux pour aller de l'un à l'autre équipement en suivant un trajet de propagation, dit "trajet le plus fort", emprunté par une partie principale de l'énergie des signaux, et
- des moyens (43) d'envoi vers l'équipement sollicité (Z) d'une trame de sondage de canal, destinée à permettre une estimation d'une différence de temps de vol (ΔTOF) entre le trajet de propagation le plus fort et un premier trajet de propagation.

**9.** Equipement initiateur (A) selon la revendication 8, dans lequel les moyens d'envoi d'une trame de sondage vers l'équipement sollicité (Z) sont adaptés pour envoyer une trame de sondage contenant le premier temps de vol calculé.

**10.** Equipement (Z), dit "sollicité", comprenant un dispositif pour l'estimation de la distance entre un premier équipement dit "initiateur" (A) et le second équipement sollicité (Z), comprenant des moyens (51) pour, sur réception d'une requête aux fins de mesurer une durée d'échange entre les deux équipements (A, Z), émettre un accusé de réception, des moyens (52, 53) pour recevoir une trame de sondage de canal et pour, à partir des signaux radio reçus correspondant à ladite trame de sondage de canal, estimer une différence de temps de vol (ΔTOF) entre le temps de vol de signaux ayant suivi le trajet de propagation le plus fort, emprunté par une partie principale de l'énergie des signaux reçus, et le temps de vol emprunté par des signaux ayant suivi un premier trajet de propagation.

**11.** Equipement (Z) selon la revendication 10, comprenant en outre des moyens (50) pour recevoir la valeur d'un premier temps de vol estimé et des moyens (54) de calcul de la distance entre les deux équipements (A, Z) agencés pour déterminer un second temps de vol par soustraction de la différence de temps de vol (ΔTOF) estimée du premier temps de vol estimé et pour calculer ladite distance à partir du second temps de vol déterminé.

**12.** Système comprenant un équipement sollicité (Z) selon l'une des revendications 10 et 11 et au moins un autre équipement initiateur (A) selon l'une des revendications 8 et 9.

**13.** Programme d'ordinateur pour un équipement dit "initiateur", adapté pour initier une estimation de la distance entre ledit équipement initiateur et un autre équipement, dit "sollicité", comprenant des instructions de code pour commander l'exécution de celles des étapes du procédé selon l'une des revendications 1 à 6 qui sont réalisées par le premier équipement initiateur (A).

**14.** Programme d'ordinateur pour un dit "sollicité" pour l'estimation de la distance entre un équipement dit "initiateur" et ledit équipement sollicité, comprenant des instructions de code pour commander l'exécution de celles des étapes du procédé selon l'une des revendications 1 à 6 qui sont réalisées par le second équipement sollicité (Z).

**Claims**

**1.** Method for estimating the distance between a first and a second radio device comprising

■ a phase (1) of estimating, implemented by the first device (A), a first time of flight between the two devices (A, Z) corresponding to the duration of transmission of signals to go from one to the other device following a propagation path, called "the strongest path", taken by a main portion of the energy of the signals,
■ a phase (2) of estimating a time of flight difference comprising the sending of a channel sounding frame from one to the other device (E21) and, on the basis of the radio signals received corresponding to said channel sounding frame, estimating a time-of-flight difference (ΔTOF) between the strongest propagation path and a first propagation path (E22),
■ a phase (3) of calculating the distance between the two devices (A, Z) comprising the determination of a second time of flight ($TOF_2$) by subtracting the estimated time-of-flight difference (ΔTOF) from the first estimated time of flight ($TOF_1$) (E30) and calculating the distance (D) between the two devices on the basis of the second duly determined time of flight ($TOF_2$) (E31),

**characterized in that** it is the first device, called the initiating (A), which sends to the second (Z), called solicited, said channel sounding frame (E21) the estimation of the time-of-flight difference (E22) being performed by the solicited second device (Z).

**2.** Method according to Claim 1, in which the initiating first device (A) transmits to the solicited second device (Z) the value of the first estimated time of flight ($TOF_1$) (E21) and it is the solicited second device (Z) which estimates the second time of flight ($TOF_2$) (E30) and deduces therefrom the distance (D) between the two devices (E31).

3. Method according to one of Claims 1 and 2, in which the solicited second device (Z) transmits to the initiating first (A) the value of the distance (D) estimated between the two devices (A, Z).

4. Method according to one of Claims 1 to 3, in which, the solicited second device (Z) sending an acknowledgement of reception in response to a request from the initiating first device (A) (E12) in the phase (1) of estimating the first time of flight, the initiating first device allows a duration T to expire between the instant of arrival of the acknowledgement of reception and the instant of transmission of the channel sounding frame (E20), said duration T comprising a guard time suitable for enabling the initiating first device to estimate the first time of flight ($TOF_1$) followed by a pause time suitable for observing the conditions of shared access to the channel and being suitable for the overall duration of the phase (1) of estimating the first time of flight and of the phase (2) of estimating a time-of-flight difference to be less than the channel coherence time.

5. Method according to one of the preceding claims, in which, during the phase (1) of estimating the first time of flight, the solicited second device (Z) allows a timer duration ($T_w$) (E11), known to both devices, to expire between the moment when it receives a request from the initiating first device and the moment when it sends an acknowledgement of reception in response, and the initiating first device (A) measures the duration of the exchange between the two devices (E15), subtracts said timer duration from the measured exchange duration and divides the result of the subtraction by two in order to estimate the first time of flight ($TOF_1$) (E16).

6. Method according to one of the preceding claims, in which the phase (1) of estimating a first time of flight comprises a plurality of estimations of the first time of flight ($TOF_1$) and, on the basis of the different estimations of the first time of flight, the initiating first device calculates a first average time of flight.

7. Method for locating a device to be located (Z) by a set of at least three other devices (A, B, C), in which each of the three other devices (A, B, C) of said set implements those of the steps performed by the initiating first device in the method of Claims 1 to 6, whereas the device to be located (Z) implements those of the steps performed by the solicited second device in the method according to one of Claims 1 to 5.

8. Device (A), called "initiating", suitable for initiating an estimation of the distance between said initiating device (A) and another device (Z), called "solicited", comprising

- means (40) for sending to the solicited device (Z) a request for the purposes of measuring an exchange duration between the two devices (A, Z),
- means (41) for receiving an acknowledgment of reception in response to the request,
- means (42, 44, 45) for measuring the duration of the exchange between the two devices (A, Z),
- means for calculating, on the basis of the measured exchange duration, a first time of flight between the two devices (A, Z), corresponding to the duration of transmission of signals to go from one to the other device following a propagation path, called "the strongest path", taken by a main portion of the energy of the signals, and
- means (43) for sending to the solicited device (Z) a channel sounding frame, intended to allow for an estimation of a time-of-flight difference ($\Delta$TOF) between the strongest propagation path and a first propagation path.

9. Initiating device (A) according to Claim 8, in which the means for sending a sounding frame to the solicited device (Z) are suitable for sending a sounding frame containing the first calculated time of flight.

10. Device (Z), called "solicited" comprising a device for estimating the distance between a first device, called "initiating" (A), and the solicited second device (Z), comprising means (51) for, on reception of a request for the purposes of measuring an exchange duration between the two devices (A, Z), sending an acknowledgment of reception, means (52, 53) for receiving a channel sounding frame and for, on the basis of the radio signals received corresponding to said channel sounding frame, estimating a time-of-flight difference ($\Delta$TOF) between the time-of-flight of signals that have followed the strongest propagation path, taken by a main portion of the energy of the received signals, and the time-of-flight of signals that have followed a first propagation path.

11. Device (Z) according to Claim 10, also comprising means (50) for receiving a value of a first estimated time of flight and means (54) for calculating the distance between the two devices (A, Z) arranged to determine a second time-of-flight by subtracting the estimated time-of-flight difference ($\Delta$TOF) from the first estimated time-of-flight and for calculating said distance on the basis of the determined second time-of-flight.

12. System comprising a solicited device (Z) according to one of Claims 10 and 11 and at least one other initiating device (A) according to one of Claims 8 and 9.

**13.** Computer program for a so-called "initiating" device, suitable for initiating an estimation of the distance between said initiating device and another device, called "solicited", comprising code instructions for controlling the execution of those of the steps of the method according to one of Claims 1 to 6 which are performed by the initiating first device (A).

**14.** Computer program for a so-called "solicited" device for estimating the distance between a so-called "initiating" device and said solicited device, comprising code instructions for controlling the execution of those of the steps of the method according to one of Claims 1 to 6 which are performed by the solicited second device (Z).

**Patentansprüche**

**1.** Verfahren zur Schätzung der Entfernung zwischen einem ersten und einem zweiten Funkgerät, das enthält

• eine Phase (1) der Schätzung, durchgeführt vom ersten Gerät (A), einer ersten Flugzeit zwischen den zwei Geräten (A, Z) entsprechend der Übertragungsdauer von Signalen, um von dem einen zum anderen der Geräte gemäß einem Ausbreitungsweg, "stärkster Weg" genannt, zu gehen, der von einem Hauptteil der Energie der Signale benutzt wird,
• eine Phase (2) der Schätzung einer Flugzeitdifferenz, die das Senden eines Kanalsondierungsrahmens von dem einen zum anderen Gerät (E21) und, ausgehend von den dem Kanalsondierungsrahmen entsprechenden empfangenen Funksignalen, die Schätzung einer Flugzeitdifferenz ($\Delta$TOF) zwischen dem stärksten Ausbreitungsweg und einem ersten Ausbreitungsweg (E22) aufweist,
• eine Phase (3) der Berechnung der Entfernung zwischen den zwei Geräten (A, Z), die die Bestimmung einer zweiten Flugzeit ($TOF_2$) durch Subtraktion der geschätzten Flugzeitdifferenz ($\Delta$TOF) von der ersten geschätzten Flugzeit ($TOF_1$) (E30) und die Berechnung der Entfernung (D) zwischen den zwei Geräten ausgehend von der so bestimmten zweiten Flugzeit ($TOF_2$) (E31) aufweist,

**dadurch gekennzeichnet, dass** es das erste, auslösend genannte Gerät (A) ist, das an das zweite, beaufschlagt genannte Gerät (Z) den Kanalsondierungsrahmen (E21) sendet, wobei die Schätzung der Flugzeitdifferenz (E22) von dem zweiten beaufschlagten Gerät (Z) durchgeführt wird.

**2.** Vorrichtung nach Anspruch 1, wobei das erste auslösende Gerät (A) an das zweite beaufschlagte Gerät (Z) den Wert der ersten geschätzten Flugzeit ($TOF_1$) (E21) überträgt, und es das zweite beaufschlagte Gerät (Z) ist, das die zweite Flugzeit ($TOF_2$) (E30) schätzt und daraus die Entfernung (D) zwischen den zwei Geräten ableitet (E31).

**3.** Verfahren nach einem der Ansprüche 1 und 2, wobei das zweite beaufschlagte Gerät (Z) an das erste auslösende Gerät (A) den Wert der geschätzten Entfernung (D) zwischen den zwei Geräten (A, Z) überträgt.

**4.** Verfahren nach einem der Ansprüche 1 bis 3, wobei, wenn das zweite beaufschlagte Gerät (Z) eine Empfangsbestätigung als Antwort auf eine Anforderung vom ersten auslösenden Gerät (A) in der Phase (1) der Schätzung der ersten Flugzeit sendet (E12), das erste auslösende Gerät eine Dauer T zwischen dem Ankunftszeitpunkt der Empfangsbestätigung und dem Sendezeitpunkt des Kanalsondierungsrahmens (E20) verstreichen lässt, wobei die Dauer T eine geeignete Schutzzeit, um es dem ersten auslösenden Gerät zu erlauben, die erste Flugzeit ($TOF_1$) zu schätzen, gefolgt von einer geeigneten Pausenzeit aufweist, um die Bedingungen eines gemeinsamen Zugriffs auf den Kanal zu beachten, und geeignet ist, damit die Gesamtdauer der Phase (1) der Schätzung der ersten Flugzeit und der Phase (2) der Schätzung einer Flugzeitdifferenz unter der Kohärenzzeit des Kanals liegt.

**5.** Verfahren nach einem der vorhergehenden Ansprüche, wobei in der Phase (1) der Schätzung der ersten Flugzeit das zweite beaufschlagte Gerät (Z) eine Verzögerungsdauer ($T_w$), die den beiden Geräten bekannt ist, zwischen dem Zeitpunkt, an dem es eine Anforderung vom ersten auslösenden Gerät empfängt, und dem Zeitpunkt, an dem es als Antwort eine Empfangsbestätigung sendet, verstreichen lässt (E11), und das erste auslösende Gerät (A) die Dauer des Austauschs zwischen den zwei Geräten (E15) misst, die Verzögerungsdauer von der gemessenen Austauschdauer subtrahiert, und das Ergebnis der Subtraktion halbiert, um die erste Flugzeit ($TOF_1$) zu schätzen (E16).

**6.** Verfahren nach einem der vorhergehenden Ansprüche, wobei die Phase (1) der Schätzung einer ersten Flugzeit mehrere Schätzungen der ersten Flugzeit ($TOF_1$) enthält, und ausgehend von den verschiedenen Schätzungen der ersten Flugzeit das erste auslösende Gerät eine erste mittlere Flugzeit berechnet.

**7.** Verfahren zur Ortung eines zu ortenden Geräts (Z) durch eine Einheit von mindestens drei anderen Geräten (A, B, C), wobei jedes der drei anderen Geräte (A, B, C) der Einheit diejenigen der Schritte durchführt, die von dem ersten auslösenden Gerät im Verfahren der Ansprüche 1 bis 6 durchgeführt werden, während das zu ortende Gerät (Z) diejenigen der Schritte durchführt, die vom zweiten beaufschlagten Gerät im Verfahren nach einem der Ansprüche 1 bis 5 durchgeführt werden.

8. Gerät (A), "auslösend" genannt, das geeignet ist, um eine Schätzung der Entfernung zwischen dem auslösenden Gerät (A) und einem anderen, "beaufschlagt" genannten Gerät (Z) auszulösen, das enthält

- Einrichtungen (40) zum Senden an das beaufschlagte Gerät (Z) einer Anforderung mit dem Zweck, eine Austauschdauer zwischen den zwei Geräten (A, Z) zu messen,
- Einrichtungen (41), um eine Empfangsbestätigung als Antwort auf die Anforderung zu empfangen,
- Einrichtungen (42, 44, 45) zur Messung der Dauer des Austauschs zwischen den zwei Geräten (A, Z),
- Einrichtungen, um ausgehend von der gemessenen Austauschdauer eine erste Flugzeit zwischen den zwei Geräten (A, Z) zu berechnen, die der Übertragungsdauer von Signalen entspricht, um von dem einen zum anderen Gerät gemäß einem Ausbreitungsweg, "stärkster Weg" genannt, zu gehen, der von einem Hauptteil der Energie der Signale benutzt wird, und
- Einrichtungen (43) zum Senden an das beaufschlagte Gerät (Z) eines Kanalsondierungsrahmens, der dazu bestimmt ist, eine Schätzung einer Flugzeitdifferenz (ΔTOF) zwischen dem stärksten Ausbreitungsweg und einem ersten Ausbreitungsweg zu erlauben.

9. Auslösendes Gerät (A) nach Anspruch 8, wobei die Einrichtungen zum Senden eines Sondierungsrahmens an das beaufschlagte Gerät (Z) geeignet sind, um einen die erste berechnete Flugzeit enthaltenden Sondierungsrahmen zu senden.

10. Gerät (Z), "beaufschlagt" genannt, das eine Vorrichtung zur Schätzung der Entfernung zwischen einem ersten Gerät (A), "auslösend" genannt, und dem zweiten beaufschlagten Gerät (Z) enthält, das Einrichtungen (51), um bei Empfang einer Anforderung zum Zweck des Messens einer Austauschdauer zwischen den zwei Geräten (A, Z) eine Empfangsbestätigung zu senden, Einrichtungen (52, 53), um einen Kanalsondierungsrahmen zu empfangen, und um ausgehend von den empfangenen Funksignalen, die dem Kanalsondierungsrahmen entsprechen, eine Flugzeitdifferenz (ΔTOF) zwischen der Flugzeit von Signalen, die dem stärksten Ausbreitungsweg gefolgt sind, der von einem Hauptteil der Energie der empfangenen Signale genutzt wird, und der Flugzeit der Signale zu schätzen, die einem ersten Ausbreitungsweg gefolgt sind, enthält.

11. Gerät (Z) nach Anspruch 10, das außerdem Einrichtungen (50) zum Empfang des Werts einer ersten geschätzten Flugzeit und Einrichtungen (54) zur Berechnung der Entfernung zwischen den zwei Geräten (A, Z) enthält, die eingerichtet sind, um eine zweite Flugzeit durch Subtraktion der geschätzten Flugzeitdifferenz (ΔTOF) von der ersten geschätzten Flugzeit zu bestimmen, und um die Entfernung ausgehend von der zweiten bestimmten Flugzeit zu berechnen.

12. System, das ein beaufschlagtes Gerät (Z) nach einem der Ansprüche 10 und 11 und mindestens ein anderes auslösendes Gerät (A) nach einem der Ansprüche 8 und 9 enthält.

13. Computerprogramm für ein "auslösend" genanntes Gerät, das geeignet ist, um eine Schätzung der Entfernung zwischen dem auslösenden Gerät und einem anderen, "beaufschlagt" genannten Gerät auszulösen, das Codeanweisungen enthält, um die Ausführung derjenigen der Schritte des Verfahrens nach einem der Ansprüche 1 bis 6 zu steuern, die von dem ersten auslösenden Gerät (A) durchgeführt werden.

14. Computerprogramm für ein "beaufschlagt" genanntes Gerät" zur Schätzung der Entfernung zwischen einem "auslösend" genannten Gerät und dem beaufschlagten Gerät, das Codeanweisungen enthält, um die Ausführung derjenigen der Schritte des Verfahrens nach einem der Ansprüche 1 bis 6 zu steuern, die von der zweiten beaufschlagten Gerät (Z) durchgeführt werden.

Figure 1

Figure 2

Figure 3

Figure 4A

Figure 4B

# EP 1 921 462 B1

## RÉFÉRENCES CITÉES DANS LA DESCRIPTION

**Documents brevets cités dans la description**

- WO 2006072697 A